(19) Europäisches Patentamt
European Patent Office
Office européen des brevets

(11) **EP 2 739 966 B1**

(12) **EUROPÄISCHE PATENTSCHRIFT**

(45) Veröffentlichungstag und Bekanntmachung des Hinweises auf die Patenterteilung:
**08.05.2024 Patentblatt 2024/19**

(21) Anmeldenummer: **12737716.6**

(22) Anmeldetag: **13.07.2012**

(51) Internationale Patentklassifikation (IPC):
**G01N 29/22** *(2006.01)* **G01N 29/265** *(2006.01)*
**F16L 55/28** *(2006.01)*

(52) Gemeinsame Patentklassifikation (CPC):
**G01B 17/02; G01N 29/225; G01N 29/265;**
G01N 2291/2636

(86) Internationale Anmeldenummer:
**PCT/EP2012/002950**

(87) Internationale Veröffentlichungsnummer:
**WO 2013/020628 (14.02.2013 Gazette 2013/07)**

(54) **VERFAHREN ZUR AUFDACHUNGSMESSUNG VON ROHRLEITUNGEN MITTELS ULTRASCHALLPRÜFUNG**

METHOD FOR MEASUREMENT OF PEAKING OF PIPES BY MEANS OF ULTRASOUND TESTING

PROCÉDÉ POUR LA MESURE DES DÉFAUTS LONGITUDINAUX DE SOUDAGE SUR CONDUITES TUBULAIRES, À L'AIDE D'ESSAIS AUX ULTRASONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.08.2011 DE 102011109717**

(43) Veröffentlichungstag der Anmeldung:
**11.06.2014 Patentblatt 2014/24**

(73) Patentinhaber: **NDT Global GmbH**
**76297 Stutensee (DE)**

(72) Erfinder: **SCHWARZ, Axel**
**76356 Weingarten (DE)**

(74) Vertreter: **Global IP Europe Patentanwaltskanzlei**
**Pfarrstraße 14**
**80538 München (DE)**

(56) Entgegenhaltungen:
**DE-B4- 10 262 232   DE-T2- 3 853 323**
**US-A1- 2001 017 541**

• **FOULDS J R ET AL: "Concerns about seam-welded piping at elevated temperatures", 1996, PROCEEDINGS OF SPIE - THE INTERNATIONAL SOCIETY FOR OPTICAL ENGINEERING - NONDESTRUCTIVE EVALUATION OF UTILITIES AND PIPELINES 1996 SPIE US, VOL. 2947, PAGE(S) 67 - 77, XP002685322, Zusammenfassung Absatz [2.3Effectofpipeconfiguration]**

**Beschreibung**

Die Erfindung betrifft ein Verfahren zur Aufdachungsmessung einer Rohrleitung, insbesondere einer Pipeline, mittels einer Ultraschallmessung mit Ultraschallprüfköpfen, die auf Sensorhaltern eines Sensorträgers montiert sind, der in einer Transportrichtung durch die Rohrleitung bewegt wird.

Aus der DD 301 770 B5 ist ein Diagnosemolch zur Ermittlung von Schad-stellen an Rohrleitungswänden nach dem Wirbelstromverfahren bekannt. Hierbei wird ein Trägerring mit Reihen hintereinander versetzt angeordneter Wirbelstromsensoren verwendet, die einzeln mittels federnder Bügel an der Rohrinnenwand geführt werden. Das in dieser Druckschrift beschriebene Messsystem kann Risse und Korrosionsstellen erkennen, aber keine Aufdachungen des Rohres messen. Die Sensoren sind so geführt, dass sie in Aufdachungen eintauchen, um ein Anliegen an der Rohrwand für die Prüfung zu gewährleisten. Somit ist eine Messung der Aufdachung, also die Differenz zur geometrischen Rundheit, nicht möglich.

Die DE 30 34 319 C2 beschreibt ein Inspektionsgerät zur Ermittlung von Rissen in Rohren. Die hierzu verwendeten Ultraschallsensoren werden mit Federn in Richtung auf die Rohrinnenfläche gedrückt. Das in dieser Druckschrift beschriebene Messsystem kann Risse mittels Ultraschall erkennen, aber keine Aufdachungen des Rohres messen. Die Anzahl der UltraschallSensoren und somit die Auflösung ist zu gering, als dass man eine Aufdachungsmessung durchführen könnte. Eine Aufdachungsmessung ist ferner auch deshalb nicht möglich, weil das Verhältnis der Sensorhalterbreite zur Prüfbreite fast 1 beträgt.

Aus der DE 38 53 323 T2 sind Geräte zur Untersuchung einer Ölleitung mit Ultraschall bekannt, mit dem eine Deformation und eine Störung einer Wanddicke eines Rohrkörpers detektiert und ihre Position bestimmt werden kann. Das in dieser Druckschrift beschriebene Messsystem führt mittels Ultraschallsensoren eine Abstandsmessung zur Rohrwand durch und kann somit die Kontur des Rohres messen. Es wird mit einem starren Sensorring die Rohrwand abgetastet. Der Abstand zwischen dem Ende der Sensoren und der inneren Rohrwand wird auch mittels Rotations- und Wirbelstrom-Messvorrichtungen gemessen. Jede Rotations-Abstands-Messvorrichtung besteht aus einem Arm, der an seinem Ende mit einer Rolle versehen ist, einem Rotationswinkel-Messgerät, das einen Rotationswinkel der Rolle misst, und einer Feder zum Drücken der Rolle an die innere Wand. Jede Wirbelstrom-Messvorrichtung besteht aus einer Kunstgummi-Schabmanschette, die in Kontakt mit der inneren Wand ist, und einem Wirbelstrom-Sensor, der an dem Kontakt-Ende der Schabmanschette befestigt ist.

Die Nachteile sind ein zu großer Vorlauf, durch den hohen Vorlauf bedingt eine geringe Auflösung und bei nicht zentrischer Lage des Messsystems Messfehler. Das System ist geeignet, Beulen zu erfassen, für eine Aufdachungsmessung ist es jedoch zu ungenau.

Die DE 102 62 232 B4 beschreibt ein Verfahren und eine Vorrichtung zum Prüfen von Rohrleitungen auf Korrosion, Lochfraß und Risse. Hierzu werden Messsensoren derart auf einem Molch angeordnet, dass eine vollständige Signalabdeckung des Rohrumfangs erreicht wird. Um den Molch herum sind in zwei Ebenen Sensorhalter angeordnet, die jeweils eine zur Aufnahme der Messsensoren dienende Kufe umfassen. Die Kufen werden mittels Federelementen nach aussen gedrückt, damit sie an der Innenseite der Rohrleitung anliegen. Die Messsensoren sind in zwei aufeinanderfolgenden Ringen auf Lücke gegeneinander versetzt angeordnet, so dass eine vollständige Sensorabdeckung in Umfangsrichtung erreicht ist.

Das in dieser Druckschrift beschriebene Messsystem kann Risse und Korrosionsstellen mittels Ultraschall erkennen, aber keine Aufdachungen des Rohres messen, da der Aufbau des Sensorträgers als Ziel die Vollabdeckung hat. Die Kufen sind somit nur so breit, dass sie alle Sensoren für eine Vollabdeckung aufnehmen können. Die Kufen würden in eine Aufdachung eintauchen und die wirkliche Tiefe nicht messen können.

Bei der Herstellung von längs geschweißten Rohren entstehen fertigungsbedingt Unrundheiten, sogenannte Aufdachungen, im Bereich der Schweißnaht. Diese Abweichungen von der theoretischen Rundheit werden durch Druckbeanspruchung der Rohre, beispielsweise bei einer Druckprüfung, noch größer und es kann zu verstärkter Rissbildung in und an der Schweißnaht und somit zur Undichtigkeit der Rohrleitung bzw. Pipeline kommen. Es ist bekannt, dass Aufdachungen einen dominierenden Einfluss auf das Ermüdungsverhalten von Rohren haben. Dies liegt im Prinzip daran, dass sich durch eine Aufdachung eine spannungserhöhende Kerbwirkung bildet. Auch ist der Einfluss von Rissen innerhalb der Aufdachung größer, sodass ein Versagen früher eintritt. Das Zusammenfallen einer hohen Aufdachung mit einem Riss ist als kritischer Zustand zu bewerten. So werden bereits Risse mit nur 0,1 mm Risstiefe, die genügend Sicherheitsreserve haben, wenn sie außerhalb einer Aufdachung liegen, kritisch, wenn sie an Stellen hoher Aufdachung von ca. 6 mm auftreten.

In der US 2001/017541 A1 wird ein Verfahren zum Prüfen einer Rohrleitung beschrieben, bei dem die Sensoren bzw. magnetorestriktiven Prüfköpfe auf beweglichen, mit Rollen versehenen Haltern montiert sind. Dabei sind die Halter nur in einem zentralen Messbereich mit Sensoren bestückt und die Messbereichbreite ist nicht größer als die Hälfte der Halterbreite. Dennoch betrifft dieses Dokument keine Deformationsmessung und die bauliche Gestalt des Sensorhalters wird nicht im Zusammenhang mit der Form der Innenseite der Rohrleitung diskutiert.

Das Messen von Rissen an der Schweißnaht bei einer hohen Aufdachung ist aufgrund der Geometrie nur bedingt möglich, da der Einschallwinkel stark variieren kann, beispielsweise bei einer Aufdachung von 6 mm in einer Pipeline mit 40 Zoll (101,6 cm) Durchmesser theoretisch bis zu 8,8°. Somit wird die Sicherheit von Pipelines häufig durch einen Stresstest mit Druckerhöhung ermittelt. Diese statischen oder zyklischen Tests sind nicht zerstörungsfrei, da die Rohre, die beschädigt sind, platzen. Aber auch nicht platzende Rohre werden durch den Stresstest weiter vorgeschädigt und ihre Restnutzungsdauer verkürzt sich.

Um den hohen Aufwand und die Kosten dieser Stresstests zu minimieren, wird versucht, mit einem intelligenten Molch die Aufdachung zu messen. Durch Vergleichswerte weiß man, welche maximale Aufdachung noch akzeptabel ist. Derzeit wird diese Messung mit Ultraschall-Wanddickenmessmolchen durchgeführt, bei denen die Ultraschallsensoren auf einem festen Ring montiert sind. Über den gemessenen Vorlauf wird die Aufdachung errechnet. Im Stand der Technik ist es bekannt, Aufdachungen in Pipelines mit einem Ultraschall-Wanddickenmessmolch zu messen. Wogegen bei der gebräuchlichen Wanddickenmessung Molche mit Sensorträgern eingesetzt werden, bei denen die Sensorhalter auf beweglichen, flexiblen Kufen montiert sind, die mittels Federelementen radial nach außen gedrückt werden, damit sie an der Innenseite der Rohrleitung anliegen, werden dabei die Ultraschallsensoren auf einem starren, zylindrischen Sensorträger angeordnet. Von dem als Referenzprofil dienenden starren Sensorträger aus kann mittels der Ultraschall-Laufzeit vom Sensor bis zum Eintrittsecho aus dem Eintritt in die Rohrwand, dem sogenannten Vorlauf, die maximale Aufdachung jedes einzelnen Rohres einer Pipeline bestimmt werden. Die Aufdachung kann dabei beispielsweise individuell für jedes Rohr so bestimmt werden, dass die Differenz zwischen der maximalen Aufdachung unmittelbar neben der Längsschweißnaht und der in einem Bereich von beispielsweise 30° rechts bzw. links der Schweißnaht gemittelten Aufdachung ermittelt wird.

Eine solche Aufdachungsmessung nach dem Stand der Technik mit einem Ultraschall-Wanddickenmessmolch, bei dem die Ultraschallsensoren auf einem festen Ring montiert sind, ist aus der Literaturstelle "Sanierung einer Rohölpipeline - Verfahren und Bewertungskriterien", H.-J. Schmidt und W. Schmidt, 5. Symposium Pipelinetechnik, 2002, Köln bekannt. Sie entspricht insoweit der oben genannten Druckschrift DE 38 53 323 T2.

Nachteilig bei diesem bekannten Verfahren zur Aufdachungsmessung ist, dass das Eigengewicht des Molches eine leichte Exzentrizität in der Größe von etwa 2 mm bis 4 mm bzw. eine außermittige Lage des Sensorträgers in dem Rohr bedingt, die eine präzise Auswertung erschwert. Durch das Eigengewicht des Molches kann die Messung nicht aus dem Zentrum des Rohres gemacht werden und die ermittelten Vorlaufwerte müssen durch Vergleichswerte korrigiert werden. Damit wird die Messung der Aufdachungen insgesamt ungenau, und weil ein Riss eine umso höhere kritische Auswirkung haben kann, desto höher die Aufdachung ist, müssen aus Sicherheitsgründen mehr Rohre der Pipeline ausgetauscht werden, als bei einer genauen Messung der Aufdachung notwendig wäre. Bei einer ungenauen Messung der Aufdachung muss also der aus Sicherheitsgründen einzuhaltende Grenzwert der Aufdachung für das Auswechseln von Rohren so angepasst werden, dass mehr Rohre als notwendig ausgetauscht werden.

Ein weiterer Nachteil dieser bekannten Aufdachungsmessung mit Ultraschallsensoren, die auf einem starren Ring angeordnet sind, betrifft den Einsatz- oder Anwendungsbereich dieses Verfahrens. Der starre Sensorträger vermindert die Passierbarkeit des Molches. In Pipelines sind oft Rohre mit verschiedenen Wanddicken und somit unterschiedlichen Innendurchmessern verbaut. Auch sind T-Stücke oder Abgänge installiert, die einen kleineren Innendurchmesser als die geraden Rohre haben. Ferner können die Leitungen Beulen aufweisen. In diesen Fällen kann ein Molch mit einem starren Sensorenhaltering entweder nicht eingesetzt werden, da er die Engstelle nicht passieren kann, oder der Ringdurchmesser muss verkleinert werden, was einen längeren Vorlauf und damit eine Erhöhung der Ungenauigkeit bedingt. Wenn eine Engstelle wie eine Beule ausgeschnitten und durch ein neues Rohr ersetzt werden muss, damit der Molch die Leitung passieren kann, entstehen hohe Kosten für den Betreiber der Pipeline. Nachteilig bei einem starren Sensorträger ist also, dass er keine Reduktionsfähigkeit aufweist. Dies ist die Fähigkeit des Molches bzw. Sensorträgers, Engstellen bzw. Reduktionen zu durchfahren. Sie wird in Prozent des Außendurchmessers angegeben und sollte bei praktischen Anwendungen vorteilhafterweise im Bereich von ca. 85% liegen.

Ferner kann der bekannte Molch, bedingt durch den langen Vorlauf und die entsprechend verlängerte Ultraschall-Laufzeit, nur mit einer geringen Geschwindigkeit durch die Pipeline fahren, was ebenfalls für den Pipelinebetreiber erhöhte Ausfallkosten durch die Messung bedeutet. Ein weiterer Nachteil besteht zudem darin, dass mit dem bekannten starren Sensorhaltering nur eine reine Geometriemessung, nämlich die Messung der Aufdachungen möglich ist. Eine gleichzeitige Wanddickenmessung kann nicht vorgenommen werden und hierzu ist ein separater Molchlauf erforderlich. Auch das bedingt für den Pipelinebetreiber erhöhte Ausfallkosten durch die Messung.

Ein weiteres Problem besteht in Ungenauigkeiten, die sich aus geometrischen Gründen ergeben. Die Aufdachung in einer Rohrleitung wird dadurch bestimmt, dass mittels einer Ultraschallmessung der sogenannte Vorlauf, d.h. die Wegstrecke von den Ultraschallsensoren bis zur Rohrinnenwand, bestimmt und von diesem Wert der Abstand zu einem exakt runden Rohr abgezogen wird. Damit das Messverfahren möglichst genau ist, sollte der Vorlauf unabhängig von der Position der Ultraschallsensoren bzw. der die Ultraschallsensoren tragenden Kufen sein. Dies gilt aber nur für ein rundes Rohr ohne Aufdachung. Bei einem Rohr mit einer Aufdachung können die Kufen, in Abhängigkeit von der relativen Position der Kufe zu der Aufdachung, in die Aufdachung eintauchen. Dadurch verschieben sich auch die von den Kufen geführten Sensoren etwas radial nach außen zur Rohrinnenwand und der gemessene Vorlauf ist kleiner als der "wirkliche Vorlauf", der sich ergeben würde, wenn die Kufe nicht von der Kreisform abweichend in die Aufdachung eintauchen würde. Es ergibt sich also ein als Vorlaufabweichung bezeichneter Fehler. Er bezeichnet die Abweichung des Vorlaufes von einem theoretisch präzisen Wert, der bei einer runden Geometrie ohne durch die Aufdachung resultierende Einflüsse bestimmt würde. Die Vorlaufabweichung ist abhängig von der Aufdachungsbreite und der Kufenposition. Da die Kufenposition relativ zu der Aufdachung unbestimmt ist, muss als Fehler der Aufdachungsmessung die sich aus geometrischen Gründen theoretisch maximale Vorlaufabweichung in der Auswertung der Messung als prinzipielle Messungenauigkeit berücksichtigt werden.

Bei einer an sich ungenauen Messung der Aufdachung nach dem Stand der Technik ist die Vorlaufabweichung in der Regel nicht bedeutsam, da die theoretisch maximale zu berücksichtigende Vorlaufabweichung kleiner als die anderen Ungenauigkeiten sind. Bei einer genauen Messung der Aufdachung sollte die maximale Vorlaufabweichung aber minimiert werden, damit sie keinen zu großen Fehler in der Messung beiträgt und eine wirklich genaue Aussage über die Aufdachung ermöglicht.

Ausgehend von diesem Stand der Technik liegt der vorliegenden Erfindung die Aufgabe zugrunde, ein Verfahren und einen entsprechenden Sensorträger zur Aufdachungsmessung einer Rohrleitung, insbesondere einer Pipeline zu schaffen, die genauere Ergebnisse liefern, einen weiteren Einsatz- oder Anwendungsbereich durch eine gewisse Reduktionsfähigkeit des eingesetzten Sensorträgers haben und eine gleichzeitige Wanddicken-messung ermöglichen. Dabei ist auch zu berücksichtigen, dass die Vorlaufabweichung reduziert oder minimiert wird.

Diese Aufgabe wird erfindungsgemäß durch ein Verfahren zur Ultraschallprüfung mit den Merkmalen des beigefügten Anspruchs 1 gelöst. Bevorzugte Ausgestaltungen, Weiterbildungen und Verwendungen der Erfindung ergeben sich aus den abhängigen Ansprüchen und der nachfolgenden Beschreibung mit zugehörigen Zeichnungen.

Ein Verfahren zur Aufdachungsmessung einer Rohrleitung, insbesondere einer Pipeline, mittels einer Ultraschallmessung mit Ultraschallprüfköpfen, die auf Sensorhaltern eines Sensorträgers montiert sind, der in einer Transportrichtung durch die Rohrleitung bewegt wird, weist also die Besonderheit auf, dass ein Sensorträger verwendet wird, bei dem die Sensorhalter auf beweglichen Kufen montiert sind, die mittels Federelementen radial nach außen gedrückt werden, damit sie an der Innenseite der Rohrleitung anliegen, sodass der Sensorträger eine Reduktionsfähigkeit aufweist und die Sensoren einen festen Vorlauf zur Innenseite der Rohrleitung außerhalb des Bereichs einer Aufdachung haben, Kufen mit einer großen Kufenbreite verwendet werden, die größer als die in Umfangsrichtung der Rohrleitung gemessene Aufdachungsbreite des Bereichs einer zu messenden Aufdachung ist, und die Sensorhalter jeweils nur in einem mittig zwischen zwei Kufenauflageflächen liegenden Messbereich mit Sensoren bestückt sind, wobei die Messbereichbreite kleiner oder gleich der Hälfte der Kufenbreite ist, sodass die sich im Bereich einer Aufdachung ergebende Vorlaufabweichung der Sensoren unterhalb eines vorgegebenen Grenzwertes bleibt, und der Sensorträger mindestens drei in der Transportrichtung des Sensorträgers aufeinanderfolgende Ringe mit von Sensorhaltern getragenen Sensoren aufweist, wobei die Sensoren auf den jeweiligen Ringen einen Spurabstand aufweisen und die Sensoren der aufeinanderfolgenden Ringe auf Lücke gegeneinander versetzt sind, sodass eine Vollabdeckung der Spuren über den Umfang der Rohrleitung erzielt wird.

Ein Sensorträger zur Durchführung eines erfindungsgemäßen Verfahrens zur Aufdachungsmessung einer Rohrleitung, der in einer Transportrichtung durch die Rohrleitung bewegbar ist und Sensor-halter aufweist, auf denen Ultraschallprüfköpfe zum Durchführen einer Ultraschallmessung montiert sind, weist die Besonderheit auf, dass der Sensorträger bewegliche Kufen aufweist, auf denen die Sensorhalter montiert sind, und Federelemente aufweist, mittels deren die Kufen radial nach außen gedrückt werden, damit sie an der Innenseite der Rohrleitung anliegen, sodass der Sensorträger eine Reduktionsfähigkeit aufweist und die Sensoren einen festen Vorlauf zur Innenseite der Rohrleitung außerhalb des Bereichs einer Aufdachung haben, wobei die Kufen eine große Kufenbreite aufweisen, die größer als die in Umfangsrichtung der Rohrleitung gemessene Aufdachungsbreite des Bereichs einer zu messenden Auf-dachung ist, und die Sensorhalter jeweils nur in einem mittig zwischen zwei Kufenauflageflächen liegenden Messbereich mit Sensoren bestückt sind, wobei die Messbereichbreite kleiner oder gleich der Hälfte der Kufenbreite ist, sodass die sich im Bereich einer Aufdachung ergebende Vorlaufabweichung der Sensoren unterhalb eines vorgegebenen Grenzwertes bleibt, und der Sensorträger mindestens drei in der Transportrichtung des Sensorträgers aufeinanderfolgende Ringe mit von Sensorhaltern getragenen Sensoren aufweist, wobei die Sensoren eines jeden der Ringe Spurabstand aufweisen und die Sensoren der aufeinanderfolgenden Ringe auf Lücke gegeneinander versetzt sind, sodass eine Vollabdeckung der Spuren über den Umfang der Rohrleitung erzielt wird.

Ein Molch zum Durchführen einer Aufdachungsmessung in einer Rohrleitung, insbesondere einer Pipeline, weist die Besonderheit auf, dass er mindestens einen Sensorträger umfasst.

Die Vorteile der Erfindung bestehen darin, dass die Messung genauer ist, sie durch eine Reduktionsfähigkeit des eingesetzten Sensorträgers einen weiteren Einsatz- oder Anwendungsbereich hat und eine gleichzeitige Wanddickenmessung ermöglicht.

Mit der Erfindung kann beispielsweise die Aufdachung eines Rohres gemessen werden, dessen Durchmesser zwischen 25 cm und 135 cm beträgt. Übliche Standarddurchmesser von Pipelines betragen beispielsweise 34 Zoll (86,4 cm) oder 40 Zoll (101,6 cm). Erfindungsgemäß können der Sensorträger mit Kufen und insbesondere der Sensorhalter so ausgebildet sein, dass bei einer beliebigen Stellung (Drehstellung) des Sensorhalters zur Aufdachung die theoretische Vorlaufabweichung sehr klein ist, beispielsweise kleiner als 0,25 mm, bevorzugt kleiner als 0,18 mm. Ferner kann der Vorlauf so klein gemacht werden, dass er im Bereich für eine optimale Wanddickenmessung ist, sodass gleichzeitig mit der Aufdachungsmessung auch eine Wanddickenmessung durchgeführt werden kann. Bei der Erfindung kann also ein Vorlauf gewählt werden, der eine gleichzeitige Wanddickenmessung der Rohrleitung ermöglicht, und gleichzeitig mit der Aufdachungsmessung kann eine Wanddickenmessung durchgeführt werden. Typische, praktisch bedeutsame Aufdachungen, die mit der Erfindung gemessen werden können, sind beispielsweise kleiner als 6 mm, bevorzugt kleiner als 5 mm. Die Messbereichbreite kann in vorteilhaften Ausführungsformen zwischen 5% und 50%, bevorzugt zwischen 10% und 45%, besonders bevorzugt zwischen 20% und 35% der Kufenbreite sein.

Die Reduktionsfähigkeit eines ausgebildeten Sensorträgers für die Aufdachungsmessung kann dem eines für Wanddicken-messungen gebräuchlichen Sensorträgers entsprechen, also beispielsweise 85% betragen.

Die Sensoren zur Aufdachungsmessung sind bei der Erfindung nicht auf einem festen, starren Sensorhaltering montiert, sondern auf Kufen, die mit Federn miteinander verbunden sind und der Rohrwand immer im gleichen Abstand zu dieser folgen können. Dadurch ist, im Rahmen der Reduktionsfähigkeit des Sensorträgers, der Vorlauf unabhängig vom Rohrdurchmesser. Die Kufen haben einen optimierten Vorlaufabstand für eine Wanddickenmessung, sodass beide Messungen gleichzeitig durchgeführt werden können. Der fest definierte, geringe Vorlauf und die geringe Vorlaufabweichung ermöglichen somit, dass gleichzeitig eine Aufdachungs- und eine Wanddickenmessung durchgeführt werden können.

Die Kufen sind wie bei für die Wanddickenmessung üblichen Sensorträgern mit Federn aufgehängt und können dem Verlauf der Wand folgen. Ein gleichbleibender Vorlauf wird so gewährleistet. Durch die überbreite Kufe und nur der halben Bestückung durch Sensoren auf dem Sensorhalter ist somit eine Messung der Vorlaufabweichung durch die Aufdachung mit einer theoretischen Genauigkeit von unter 0,18 mm (bei 6 mm Aufdachung) möglich.

Die Aufdachungsmessung und eine Wanddickenmessung können gleichzeitig durchgeführt werden und die Messergebnisse sind direkt vergleichbar, d.h. bei der Auswertung der Messergebnisse entfällt das

Erfordernis, die Messergebnisse von zwei Durchläufen des Messmolches durch die Pipeline hinsichtlich Drehwinkel und Lauflänge aufeinander abzubilden. Dadurch ist die Auswertung vereinfacht.

Da der Sensorträger mindestens drei, vorzugsweise vier in der Transportrichtung des Sensorträgers aufeinanderfolgende Ringe mit von Sensorhaltern getragenen Sensoren aufweist, die bevorzugt jeweils in zwei Gruppen zusammengefasst werden, von denen jede Gruppe einen Teil eines zweiteiligen Sensorträger bildet, d.h. durch die Aufteilung der Sensoren auf mehrere Ringe bzw. einen mehrteiligen Sensorträger, können hinsichtlich der Passierbarkeit des Sensorträgers durch die Rohrleitung die gleichen Spezifikationen wie bei einer gebräuchlichen Wanddickenmessung eingehalten werden. Durch die uneingeschränkte Passierbarkeit kann die Laufvorbereitung wie für einen gewöhnlichen Molchlauf durchgeführt werden. Eine besondere, separate Ermittlung des Innendurchmessers muss nicht stattfinden. Dadurch, dass für eine genaue Aufdachungsmessung keine verlangsamte Molchgeschwindigkeit erforderlich ist, sind der Aufwand und Ausfall für den Betreiber der Pipeline geringer. Bei langen Leitungen (über 100 km) werden so enorme Ausfallkosten eingespart, die bei der Vermessung bzw. Überprüfung einer Leitung entstehen. Da mit der Aufdachungsmessung gleichzeitig eine Wanddickenmessung durchgeführt wird, halbieren sich die Kosten für Laufvorbereitung und Ausfallaufwand für den Betreiber.

Da die Kufen mit Federn an die Rohrinnenwand gedrückt werden, ist ein konstanter Vorlauf gewährleistet und es kann bei der Aufdachungsmessung eine hohe Molchgeschwindigkeit wie bei einer gebräuchlichen Wanddickenmessung eingehalten werden.

Durch die genauere Führung der Sensoren und die geringe Vorlaufabweichung können die Aufdachungen genauer gemessen werden und ein Sicherheitszuschlag für den Grenzwert zum Aussondern der Rohre mit Aufdachung ist nicht notwendig. Somit können bei langen Leitungen viele Rohrstücke kostensparend weiter benutzt werden, die ansonsten bei ungenauer Messung der Aufdachung ausgetauscht werden müssten. Je genauer die Aufdachung gemessen werden kann, desto genauer kann der Zustand der Leitung bestimmt werden.

Die Erfindung wird nachfolgend anhand in den Figuren dargestellter Ausführungsbeispiele näher erläutert. Die darin beschriebenen Besonderheiten können eingesetzt werden, um bevorzugte Ausgestaltungen der Erfindung zu schaffen. Gleiche oder gleich wirkende Teile werden in den verschiedenen Figuren mit denselben Bezugszeichen bezeichnet und gewöhnlich nur einmal beschrieben, auch wenn sie bei anderen Ausführungsformen vorteilhaft eingesetzt werden können. Es zeigen:

Figur 1    einen Teilquerschnitt durch ein längs geschweißtes Rohr mit einer Aufdachung,

Figur 2    einen Teilquerschnitt durch ein längs geschweißtes Rohr ohne Aufdachung mit einer Vorlaufmessung nach dem Stand der Technik,

Figur 3    einen Teilquerschnitt durch ein längs geschweißtes Rohr mit Aufdachung mit einer Vorlaufmessung nach dem Stand der Technik in einer ersten Position der Kufe,

Figur 4 einen Teilquerschnitt durch ein längs geschweißtes Rohr mit Aufdachung mit einer Vorlaufmessung nach dem Stand der Technik in einer zweiten Position der Kufe,

Figur 5 einen Querschnitt durch einen Sensorträger nach dem Stand der Technik,

Figur 6 ein Detail zu Figur 5,

Figur 7 einen Teilquerschnitt durch ein längs geschweißtes Rohr mit Aufdachung mit einer erfindungsgemäßen Vorlaufmessung in einer ersten Position der Kufe,

Figur 8 einen Teilquerschnitt durch ein längs geschweißtes Rohr mit Aufdachung mit einer erfindungsgemäßen Vorlaufmessung in einer zweiten Position der Kufe,

Figur 9 einen Teilquerschnitt durch ein längs geschweißtes Rohr mit Aufdachung mit einer Vorlaufmessung nach dem Stand der Technik und einer erfindungsgemäßen Vorlaufmessung in einer ersten Position der Kufe,

Figur 10 einen Teilquerschnitt durch ein längs geschweißtes Rohr mit Aufdachung mit einer Vorlaufmessung nach dem Stand der Technik in einer zweiten Position der Kufe

Figur 11 einen Teilquerschnitt durch ein längs geschweißtes Rohr mit Aufdachung mit einer erfindungsgemäßen Vorlaufmessung in einer dritten Position der Kufe,

Figur 12 einen Teilquerschnitt durch ein längs geschweißtes Rohr mit Aufdachung mit einer erfindungsgemäßen Vorlaufmessung zur Berechnung der maximalen Vorlaufabweichung,

Figur 13 eine Einzelheit zu Figur 12,

Figur 14 einen zweiteiligen Sensorträger,

Figur 15 die Spurenaufteilung zu Figur 14 und

Figur 16 eine Kufe zu Figur 14.

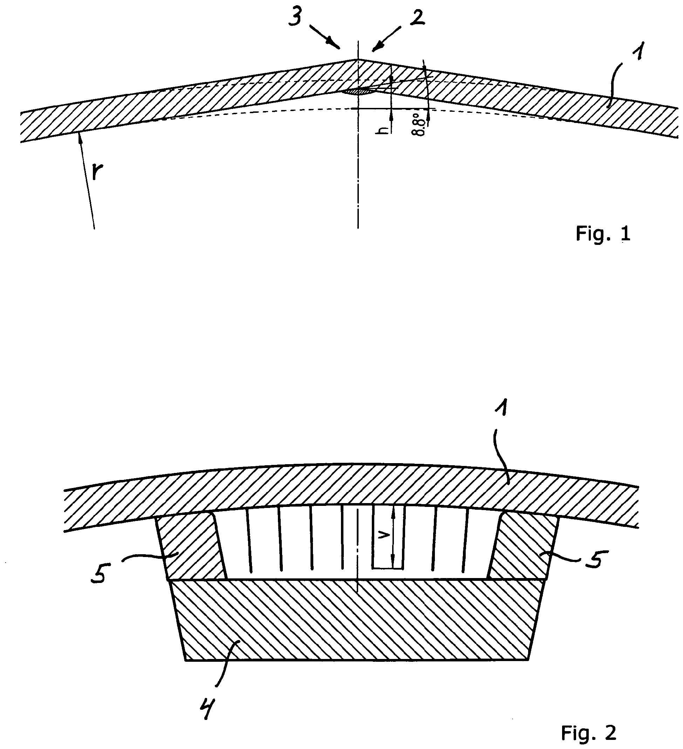

Die Figur 1 zeigt einen Teilquerschnitt durch ein längs geschweißtes Rohr 1 mit einem Rohrradius r. Es weicht von der idealen runden Form ab, da es im Bereich der Schweißnaht 2 eine Aufdachung 3 mit einer Aufdachungshöhe h aufweist. Bei einem Rohr mit r = 503,5 mm kann die Aufdachungshöhe h beispielsweise bis zu 6 mm betragen. Das Ultraschallmessen von Rissen an der Schweißnaht 2 bei einer hohen Aufdachung ist aufgrund der Geometrie nur bedingt möglich, da der Einschallwinkel stark variieren kann, beispielsweise bei der dargestellten Aufdachung 3 von 6 mm in einer Pipeline mit 40 Zoll (101,6 cm) Durchmesser theoretisch bis zu 8,8°. Der sogenannte Zentralwinkel der Aufdachung 3 beträgt in diesem Beispiel 180° - 2·8,8° = 162,4°.

Die Figur 2 zeigt einen Teilquerschnitt durch ein längs geschweißtes Rohr 1 analog zu Figur 1, aber ohne Aufdachung, mit einer Vorlaufmessung nach dem Stand der Technik. Die Ultraschallsensoren sind auf Sensorhaltern 4 montiert, der auf beweglichen, flexiblen Kufen 5 montiert sind, die mittels Federelementen radial nach außen gedrückt werden, damit sie an der Innenseite der Rohrleitung 1 anliegen. Die Kufen 5 sind Teil eines Sensorträgers, der durch das Rohr 1 gefördert wird, beispielsweise als Teil eines Molches. Die Ultraschallsensoren sind dabei im gesamten Bereich eines Sensorhalters 4 zwischen den Kufen 5 angeordnet. Für die Messung der Wanddicke des Rohres 1 wird auch der Vorlauf v von den Ultraschallsensoren bis zur Rohrinnenwand bestimmt. In dem dargestellten Beispiel beträgt der Vorlauf z.B. 16 mm.

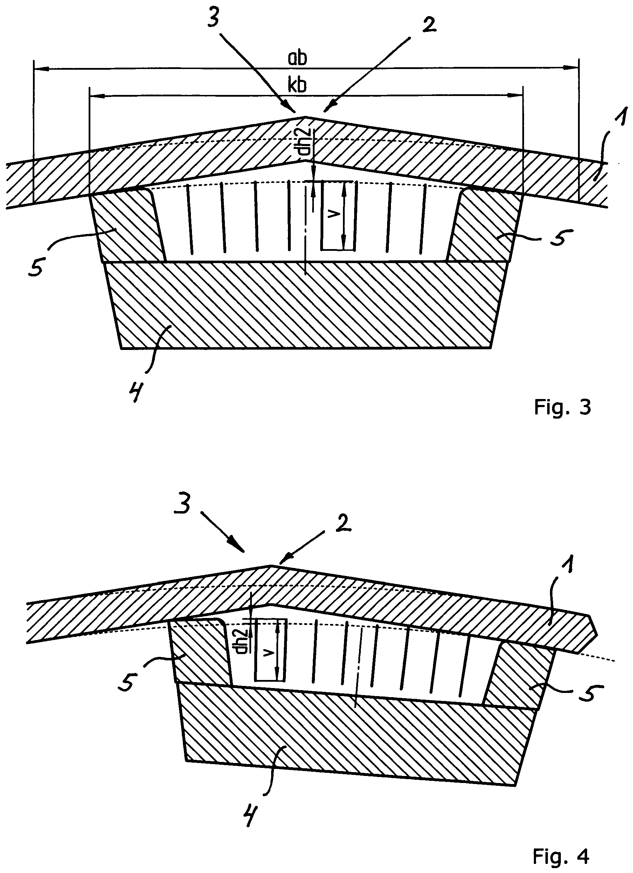

Die Figur 3 zeigt einen Teilquerschnitt durch ein längs geschweißtes Rohr 1 analog zu Figur 2, aber mit Aufdachung 3 mit einer Vorlaufmessung nach dem Stand der Technik in einer ersten Position der Kufe 5, wenn sich die Kufe 5 genau mittig unter der Schweißnaht 2 bzw. der Aufdachung 3 befindet. Die Kufe 5 hat eine Kufenbreite kb, wobei die Kufenbreite kb der maximale Abstand der Auflagefläche ist, auf der die Kufe an der Rohrwand anliegt. Die Aufdachung 3 erstreckt sich über eine Aufdachungsbreite ab. Unter Aufdachungsbreite ab ist dabei die Breite zu verstehen, auf der sich die tatsächliche Rohrwand aufgrund der Aufdachung 3 von der ideellen Rohrwand abhebt. Da die Kufe 5 in diesem Beispiel eine Kufenbreite kb = 99 mm aufweist und schmaler als die Aufdachungsbreite ab von 125 mm der Aufdachung 3 ist, taucht die Kufe 5 mit beiden Seiten etwas in die Aufdachung 3 ein. Die Vorlaufmessung von v = 16 mm zur Wand des Rohres 1 verkürzt sich dadurch um 0,22 mm. Es entsteht somit eine Vorlaufabweichung dh2 von 0,22 mm.

Die Figur 4 zeigt einen Teilquerschnitt durch ein längs geschweißtes Rohr 1 mit Aufdachung 3 mit einer Vorlaufmessung nach dem Stand der Technik in einer zweiten Position der Kufe 5. Gegenüber Figur 3 ist die Kufe 5 dabei quer zur Aufdachung 3 verdreht und taucht deshalb nur einseitig in die Aufdachung 3 ein. Dabei ergibt sich eine Vorlaufabweichung dh2 von bis zu 1,26 mm. Da man bei einer Ultraschallmessung wegen der Rotation des Sensorträgers mit den Kufen 5, Sensorhaltern 4 und Sensoren um die Förderrichtung die Position der Kufen 5 zu einer Aufdachung 3 nicht vorhersehen oder festlegen kann, ist somit aus geometrischen Gründen als systematischer Fehler der Aufdachungsmessung eine große Vorlaufabweichung von 1,26 mm bei der Auswertung der Messergebnisse und dem Aussondern von Rohrabschnitten mit grenzwertigen Aufdachungen zu berücksichtigen. Dadurch müssen bei Messungen nach dem Stand der Technik mehr Rohre als notwendig ausgesondert werden. Bei einer Aufdachungsmessung nach dem Stand der Technik kommt hinzu, dass die Sensoren nicht auf beweglichen, sondern starren Kufen 5 montiert sind, wodurch sich der Vorlauf v weiter vergrößert. Bisher wurde versucht, das Eintauchen der Kufen 5 in die Aufdachung 3 mit einem starren Sensorträger zu verhindern oder zu minimieren, was unterschiedliche Vorläufe mit sich brachte, da ein starrer Sensorträger aufgrund seines Gewichtes außermittig liegt. Eine Wanddickenmessung ist dabei nicht möglich.

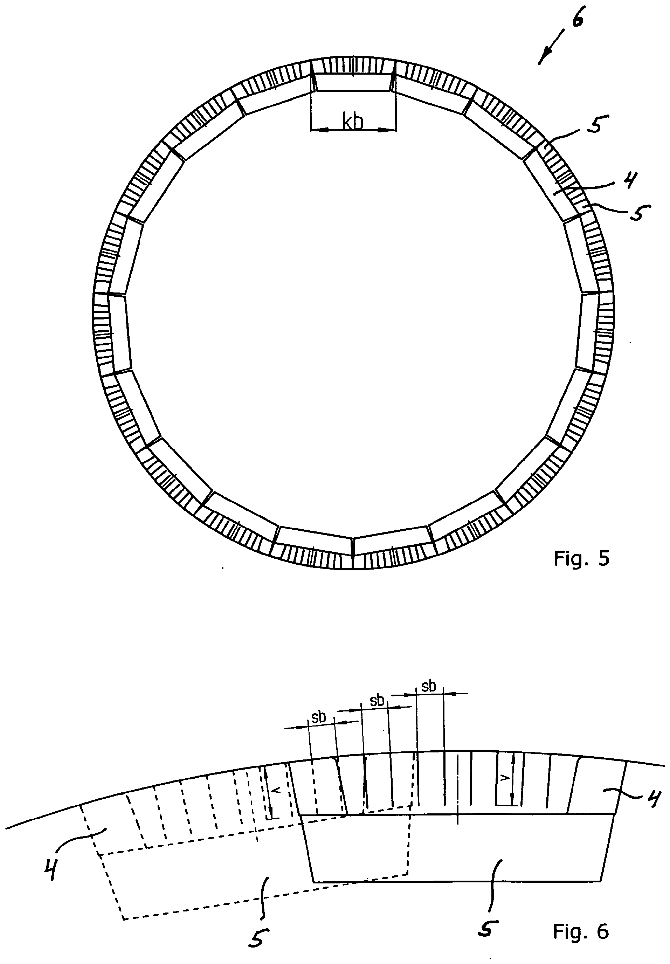

Die Figur 5 zeigt einen Querschnitt durch einen Sensorträger 6 nach dem Stand der Technik, die Figur 6 zeigt ein Detail zu Figur 5. Der Sensorträger 6 umfasst Kufen 5 mit einer Kufenbreite kb von 99 mm. Eine Kufe 5 wird so breit ausgelegt, dass die Hälfte der Kufen (der Sensorträger 6 hat zwei hintereinander angeordnete Ringe) nebeneinander einen Umfang von 85% des Außendurchmessers des Rohres ergeben, d.h. der Sensorträger hat eine Reduktionsfähigkeit von 85%, und gleichzeitig die Kufe 5 so viele Sensoren aufnehmen kann, dass beim größten Durchmesser eine Vollabdeckung erreicht wird, sprich über den gesamten Umfang alle Sensoren den gleichen Abstand X zueinander haben.

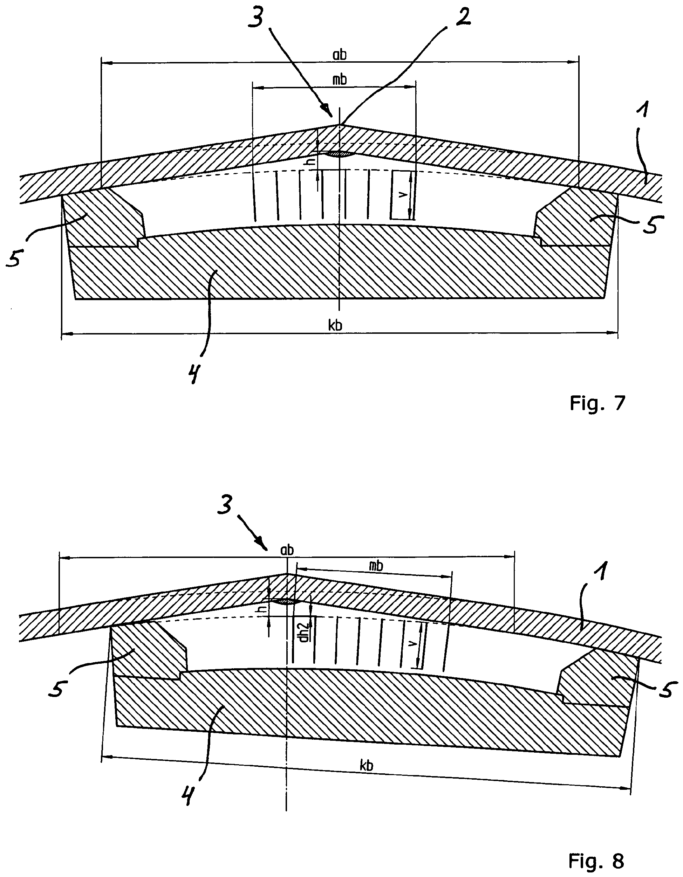

Die Figur 7 zeigt einen Teilquerschnitt durch ein längs geschweißtes Rohr 1 mit Aufdachung 3 mit einer erfindungsgemäßen Vorlaufmessung in einer ersten Position der Kufe 5, die der Position von Figur 3 entspricht. Die Figur 8 zeigt einen Teilquerschnitt durch das längs geschweißte Rohr 1 mit Aufdachung 3 mit einer erfindungsgemäßen Vorlaufmessung in einer zweiten Position der Kufe 5, die etwa der Position von Figur 4 entspricht.

Ein erfindungsgemäßes Verfahren zur Aufdachungsmessung einer Rohrleitung 1, insbesondere einer Pipeline, mittels einer Ultraschallmessung mit Ultraschallprüfköpfen, die auf Sensorhaltern 4 eines Sensorträgers montiert sind, der in einer Transportrichtung durch die Rohrleitung 1 bewegt wird, weist die Besonderheit auf, dass ein Sensorträger verwendet wird, bei dem die Sensorhalter 4 auf beweglichen Kufen 5 montiert sind, die mittels Federelementen radial nach außen gedrückt werden, damit sie an der Innenseite der Rohrleitung 1 anliegen, sodass der Sensorträger eine Reduktionsfähigkeit aufweist und die Sensoren einen festen Vorlauf v zur Innenseite der Rohrleitung 1 außerhalb des Bereichs einer Aufdachung 3 haben. Dabei werden Kufen 5 mit einer großen Kufenbreite kb verwendet, die größer als die in Umfangsrichtung der Rohrleitung 1 gemessene Aufdachungsbreite ab des Bereichs einer zu messenden Aufdachung 3 ist. Ferner sind die Sensorhalter 4 jeweils nur in einem mittig zwischen zwei Kufenauflageflächen liegenden Messbereich mit Sensoren bestückt, wobei die Messbereichbreite mb kleiner oder gleich der Hälfte der Kufenbreite kb ist, sodass die sich im Bereich einer Aufdachung 3 ergebende Vorlaufabweichung dh2 der Sensoren unterhalb eines vorgegebenen Grenzwertes bleibt. Ferner wird ein Sensorträger verwendet, der mindestens drei in der Transportrichtung des Sensorträgers aufeinanderfolgende Ringe mit von Sensorhaltern 4 getragenen Sensoren aufweist, wobei die Sensoren auf den jeweiligen Ringen einen Spurabstand aufweisen und die Sensoren der aufeinanderfolgenden Ringe auf Lücke gegeneinander versetzt sind, sodass eine Vollabdeckung der Spuren über den Umfang der Rohrleitung 1 erzielt wird.

Die Minimierung der Vorlaufabweichung dh2 wird also dadurch erreicht, dass die Kufe 5 mit der Kufenbreite kb breiter ist als die Aufdachungsbreite ab der zu messenden Aufdachung 3 und somit auch breiter als das Messfeld der Sensoren, d.h. die Messbereichbreite mb. Gleichzeitig ist das Sensorenmessfeld mit der Messbereichbreite mb nur so breit, dass die maximale Vorlaufänderung dh2 bei einer Veränderung der Lage der Kufe 5 relativ zur Aufdachung 3 klein oder minimal bleibt. Der Messbereich, d.h. das Messfeld der Sensoren, befindet sich im Bereich der Mitte der Kufe 5, aber nicht an deren Rand, an dem die Kufe 5 an der Rohrinnenwand anliegt. In dem dargestellten Beispiel beträgt der Rohrdurchmesser beispielsweise 34 Zoll (86,4 cm) bis 40 Zoll (101,6 cm). Die Aufdachungshöhe beträgt 5 mm bis 6 mm. Wenn die Kufenbreite kb kleiner als die Hälfte der Aufdachungsbreite ab beträgt und die anderen genannten Bedingungen eingehalten werden, ergibt sich eine kleine Vorlaufabweichung dh2 von in diesem Beispiel unter 0,18 mm.

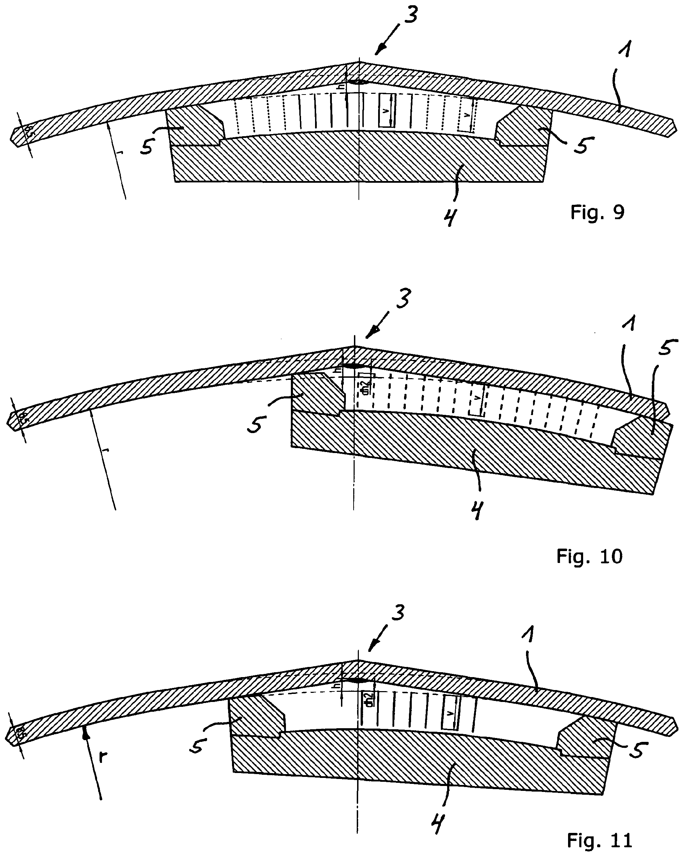

Die Figuren 9 bis 11 veranschaulichen die Vorlaufänderung dh2 in der Aufdachung 3 in Abhängigkeit von der Position der Kufe 5 relativ zu der Aufdachung 3 für das Beispiel der Figuren 7 und 8 für ein Rohr 1 mit r = 503,5 mm, einer Wandstärke von 8,5 mm und einer Aufdachungshöhe h von 6 mm. Dabei zeigt die Figur 9 einen Teilquerschnitt durch ein längs geschweißtes Rohr 1 mit Aufdachung 3 mit einer Vorlaufmessung nach dem Stand der Technik (gestrichelte Vorläufe v) und einer erfindungsgemäßen Vorlaufmessung (durchgezogene Vorläufe v) in einer ersten, mittigen Position der Kufe 5. Die Figur 10 zeigt in einem Teilquerschnitt durch ein längs geschweißtes Rohr 1 mit Aufdachung 3 mit einer Vorlaufmessung nach dem Stand der Technik in einer zweiten, verdrehten Position der Kufe 5 die maximale Vorlaufabweichung dh2 von 1,88 mm bei Vollbestückung des Sensorhalters 4 mit Sensoren gemäß dem Stand der Technik. Die Figur 11 zeigt in einem Teilquerschnitt durch ein längs geschweißtes Rohr 1 mit Aufdachung 3 mit einer erfindungsgemäßen Vorlaufmessung in einer dritten, verdrehten Position der Kufe 5 die maximale Vorlaufabweichung dh2 von nur 0,18 mm gemäß der Erfindung. Somit ist bei einer erfindungsgemäßen Vorlaufmessung eine viel genauere Aussage über den gemessenen Vorlauf und somit über die Höhe der Aufdachung möglich, auch wenn die Kufen 5 flexibel entlang der Rohrinnenwand geführt werden.

Die Erfindung schafft die technischen Voraussetzungen zur Ermöglichung einer genauen Vorlaufmessung mit flexiblen Kufen. Durch den mehrteiligen Sensorträger können die Kufen verbreitert werden und die Passierbarkeit durch eine Rohrleitung kann trotzdem erhalten werden. Die Anordnung der Sensoren auf und zu dem Sensorhalter ist so gewählt, dass eine optimale Abdeckung über den Rohrumfang gewährleistet ist und gleichzeitig eine minimale theoretische Vorlaufabweichung entstehen kann. Dabei kann die Größe des Vorlaufs der Aufdachungsmessung in den Bereich einer Wanddickenmessung gebracht werden, wodurch beide Messungen gleichzeitig durchgeführt werden können.

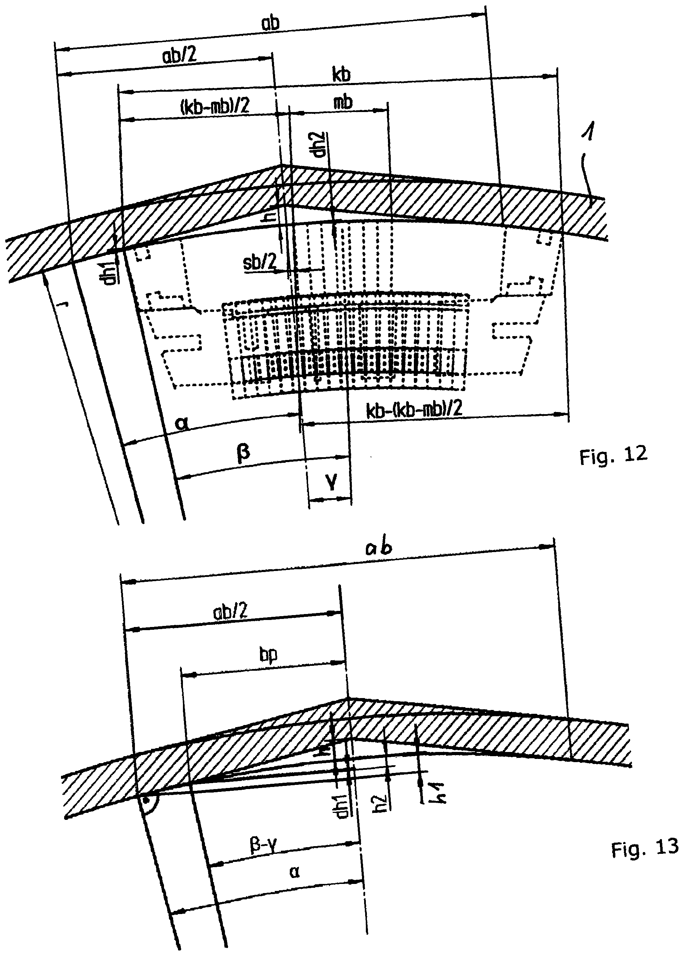

Die Figur 12 zeigt einen Teilquerschnitt durch ein längs geschweißtes Rohr 1 mit Aufdachung mit einer erfindungsgemäßen Vorlaufmessung zur Berechnung der maximalen Vorlaufabweichung dh2 und die Figur 13 zeigt eine Einzelheit zu Figur 12. Dargestellt ist der Einfluss der Kufengeometrie auf die Messgenauigkeit. Die maximale theoretische Vorlaufabweichung dh2 ist abhängig von der Kufenbreite kb, der Messbereichbreite mb, dem Rohrradius r und dem Spurabstand (Spurbreite) sb der Sensoren. Der Spurabstand (die Spurbreite) sb ist der Abstand des ideellen Einschallpunktes von Sensor zu Sensor auf der Rohrwand und ist ein Maß für die Genauigkeit der Messung. Für eine maximale theoretische Vorlaufabweichung dh2 von 0,25 mm muss für eine Aufdachungshöhe h bis 5 mm der Wert von (kb - mb - sb)/ab > 0,72 sein. Entsprechend wird nach einem vorteilhaften Merkmal für ein entsprechendes Verfahren vorgeschlagen, dass für die Messung von Aufdachungen 3, die kleiner als 5 mm sind, und für eine maximale Vorlaufabweichung dh2, die kleiner als 0,25 mm ist, die Kufenbreite kb, die Messbereichbreite mb und der Spurabstand sb der Sensoren so gewählt werden, dass für einen Rohrradius r und eine Aufdachungsbreite ab gilt: (kb-mb-sb)/ab > 0,72.

Diese Beziehung wird anhand der Figuren 12 und 13 mit den folgenden Berechnungsbeispielen erläutert. Diese Werte sind für eine maximale Aufdachungshöhe h von 5 mm ermittelt. Der Grenzwert ändert sich je nach der angenommenen maximalen Aufdachung 3. In den Figuren ist $\alpha$ der Winkel der Aufdachung 3, $\beta$ der Winkel über die halbe Kufenbreite kb und $\gamma$ der Winkel der maximalen Auslenkung der Kufe 5. Die anderen Größen ergeben sich aus den Figuren oder der nachfolgenden Berechnung.

Beispiel 1: Auslegung mit einer Vorlaufabweichung dh2 < 0,25 mm.

Vorgaben:

| | |
|---|---|
| Kufenbreite | kb = 108,85 mm |
| Messbereichbreite | mb = 24,45 mm |
| Rohrradius | r = 294,8 mm |
| Aufdachungshöhe | h = 5 mm |

Berechnung der Vorlaufabweichung dh2:

$$\alpha = a\cos\left(\frac{r}{r+h}\right) = 0{,}183$$

$$\beta = a\sin\left(\frac{kb}{2r}\right) = 0{,}186$$

$$\gamma = a\sin\left(mb \cdot \frac{8}{14 \cdot r}\right) = 0{,}047$$

$$ab = \sin(\alpha) \cdot r \cdot 2 = 107{,}232 \text{ mm}$$

$$h1 = \left(\tan(\alpha) \cdot \frac{ab}{2}\right) - h = 4{,}917 \text{ mm}$$

$$h2 = r - \big(\cos(\beta - \gamma) \cdot r\big) = 2{,}814 \text{ mm}$$

$$bp = \sin(\beta - \gamma) \cdot r = 40{,}633 \text{ mm}$$

$$dh1 = -\left[\frac{2 \cdot (h1 + h2) \cdot bp}{ab}\right] + h + h2 = 0{,}298 \text{ mm}$$

$$dh2 = \frac{dh1}{kb} \cdot \left[kb - \frac{(kb - mb)}{2}\right] = 0{,}183 \text{ mm}$$

$$dh2 = \frac{-\tan(\alpha) \cdot \sin(\beta - \gamma) \cdot r + h + \big[r - \cos(\beta - \gamma) \cdot r\big]}{kb} \cdot \frac{kb + mb}{2}$$

Berechnung Grenzwert gw:

$$sb = \frac{mb}{7} = 3{,}493 \text{ mm}$$

$$gw = \frac{(kb - mb - sb)}{ab} = 0{,}755$$

Beispiel 2:

Vorgaben:

| | | |
|---|---|---|
| Kufenbreite | kb = 104,54 mm | |
| Messbereichbreite | mb = 24,45 mm | |
| Rohrradius | r = 294,8 mm | |
| Aufdachungshöhe | h = 5 mm | |

Berechnung der Vorlaufabweichung dh2:

$$\alpha = a\cos\left(\frac{r}{r + h}\right) = 0{,}183$$

$$\beta = a\sin\left(\frac{kb}{2r}\right) = 0{,}178$$

$$\gamma = a\sin\left(mb \cdot \frac{8}{14 \cdot r}\right) = 0{,}047$$

$$ab = \sin(\alpha) \cdot r \cdot 2 = 107{,}232 \text{ mm}$$

$$h1 = \left( \tan(\alpha) \cdot \frac{ab}{2} \right) - h = 4{,}917 \text{ mm}$$

$$h2 = r - \left( \cos(\beta - \gamma) \cdot r \right) = 2{,}52 \text{ mm}$$

$$bp = \sin(\beta - \gamma) \cdot r = 38{,}461 \text{ mm}$$

$$dh1 = -\left[ \frac{2 \cdot (h1 + h2) \cdot bp}{ab} \right] + h + h2 = 0{,}406 \text{ mm}$$

$$dh2 = \frac{dh1}{kb} \cdot \left[ kb - \frac{(kb - mb)}{2} \right] = 0{,}251 \text{ mm}$$

Berechnung Grenzwert gw:

$$sb = \frac{mb}{7} = 3{,}493 \text{ mm}$$

$$gw = \frac{(kb - mb - sb)}{ab} = 0{,}714$$

Die Kufe ist zu schmal, daher ist die Vorlaufabweichung dh2 > 0,25 mm und der Grenzwert gw < 0,72.

Beispiel 3:

Vorgaben:

| | |
|---|---|
| Kufenbreite | kb = 108,85 mm |
| Messbereichbreite | mb = 28,10 mm |
| Rohrradius | r = 294,8 mm |
| Aufdachungshöhe | h = 5 mm |

Berechnung der Vorlaufabweichung dh2:

$$\alpha = a\cos\left( \frac{r}{r + h} \right) = 0{,}183$$

$$\beta = a\sin\left( \frac{kb}{2r} \right) = 0{,}186$$

$$\gamma = a\sin\left( mb \cdot \frac{8}{14 \cdot r} \right) = 0{,}054$$

$$ab = \sin(\alpha) \cdot r \cdot 2 = 107{,}232 \text{ mm}$$

$$h1 = \left( \tan(\alpha) \cdot \frac{ab}{2} \right) - h = 4{,}917 \text{ mm}$$

$$h2 = r - \left( \cos(\beta - \gamma) \cdot r \right) = 2{,}533 \text{ mm}$$

$$bp = \sin(\beta - \gamma) \cdot r = 38{,}563 \text{ mm}$$

$$dh1 = -\left[ \frac{2 \cdot (h1 + h2) \cdot bp}{ab} \right] + h + h2 = 0{,}401 \text{ mm}$$

$$dh2 = \frac{dh1}{kb} \cdot \left[ kb - \frac{(kb - mb)}{2} \right] = 0{,}252 \text{ mm}$$

Berechnung Grenzwert:

$$sb = \frac{mb}{7} = 4{,}014 \text{ mm}$$

$$gw = \frac{(kb - mb - sb)}{ab} = 0{,}716$$

Der Messbereich mb ist zu breit, daher ist die Vorlaufabweichung dh2 > 0,25 mm und der Grenzwert gw < 0,72.

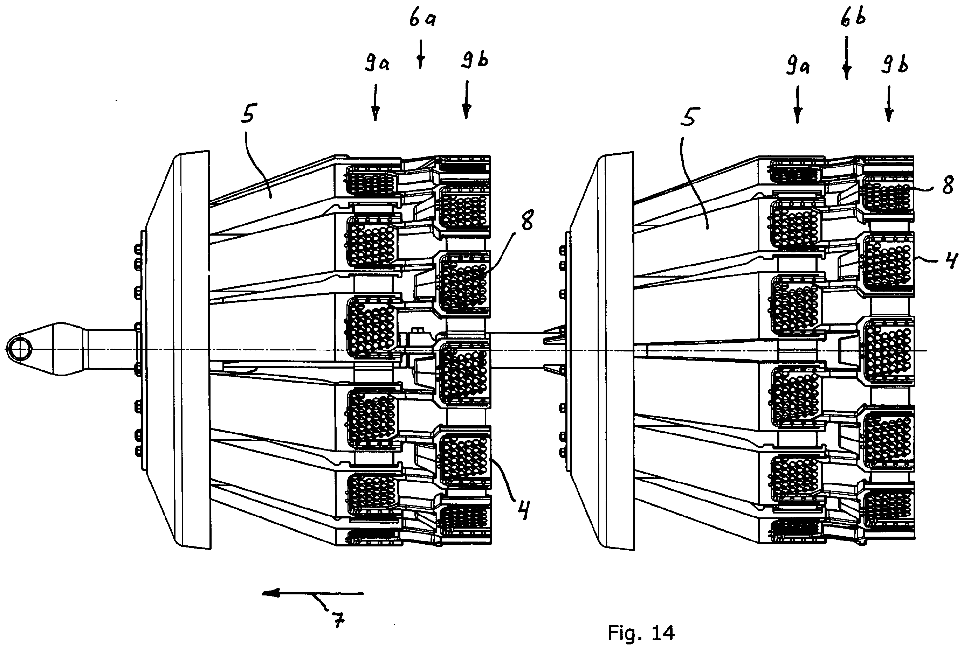

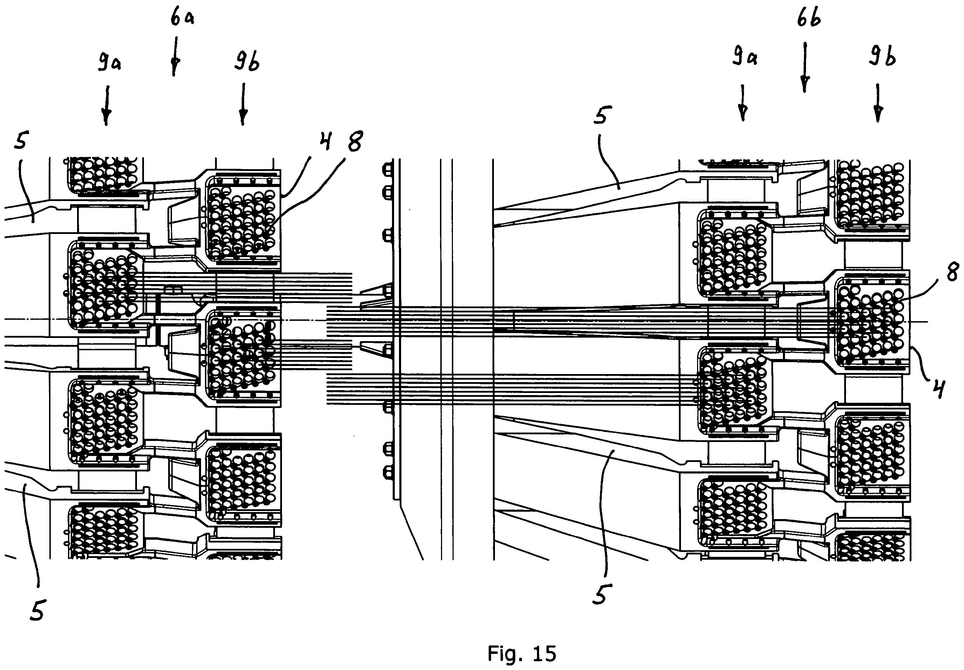

Die Figur 14 zeigt einen zweiteiligen Sensorträger 6 zum Durchführen einer erfindungsgemäßen Vorlaufmessung in einer Pipeline. Er kann Teil eines Molches sein und wird in einer Transportrichtung 7 durch die nicht dargestellte Rohrleitung bewegt. Der Sensorträger 6 umfasst einen vorderen Sensorträger 6a und einen hinteren Sensorträger 6b mit Sensoren 8, die auf Sensorhaltern 4 montiert sind, die mit beweglichen, flexiblen Kufen 5 entlang der Rohrinnenwand geführt werden. Hierzu dienen Federelemente, die die Kufen 5 radial nach außen drücken, damit sie an der Innenseite der Rohrleitung anliegen. Jeder Teil 6a, 6b des Sensorträgers 6 umfasst zwei hintereinander liegende Ringe 9a, 9b mit Sensoren 8, die auf Lücke gegeneinander versetzt sind, damit bei der Messung der gesamte Umfang des Rohres abgedeckt werden kann. Da die Kufen 5 breiter als im Stand der Technik sind, muss die Anzahl der Kufen 5 pro Ring 9 halbiert werden, um eine Reduktionsfähigkeit von 85% zu erreichen. Um bei weniger Sensoren 8 pro Kufe 5 eine Vollabdeckung zu erreichen, wird ein zweiter Sensorträger 6b auf Lücke hinter dem ersten Sensorträger 6a versetzt angeordnet. Die Figur 15 zeigt die Spurenaufteilung zu Figur 14 und die Aufteilung der Sensoren 8 (Sensorspuren) auf den Sensorhaltern 6a, 6b. Bevorzugt wird der Spurabstand gleichmäßig über den Umfang des Rohres verteilt. Mit einer solchen Anordnung kann gleichzeitig mit der Aufdachungsmessung auch eine Wanddickenmessung durchgeführt werden.

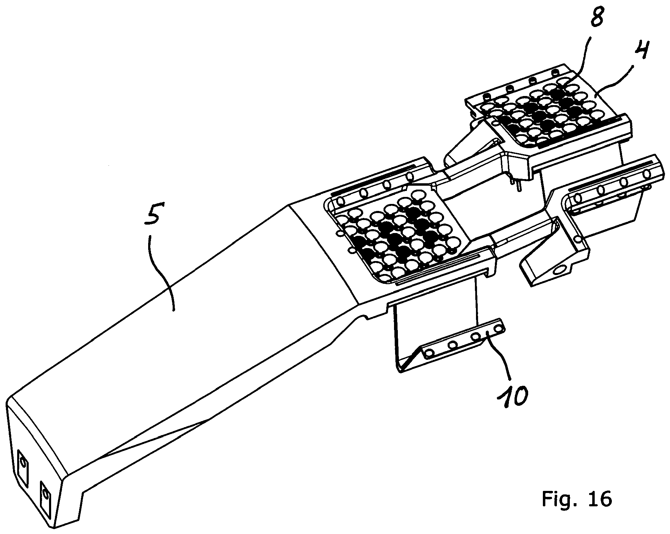

Die Figur 16 zeigt eine Kufe 5 zu Figur 14 mit Sensorhaltern 4 und bestückten Sensoren 8. Die Kufen 5 sind mit Federelementen 10 miteinander verbunden, damit die Kufen 5 immer an der Rohrinnenwand anliegen und die Sensoren 8 immer einen konstanten Vorlauf v (konstant im Sinne einer möglichst geringen Vorlaufabweichung dh2) haben, wie bei jeder gebräuchlichen Wanddickenmessung.

Bezugszeichenliste

| 1 | Rohr |
| 2 | Schweißnaht |
| 3 | Aufdachung |
| 4 | Sensorhalter |
| 5 | Kufe |
| 6 | Sensorträger |

| 7 | Transportrichtung |
|---|---|
| 8 | Sensor |
| 9 | Ring |
| 10 | Federelement |
| ab | Aufdachungsbreite |
| dh2 | Vorlaufabweichung |
| gw | Grenzwert |
| h | Höhe der Aufdachung |
| kb | Kufenbreite |
| mb | Messbereichbreite |
| r | Rohrradius |
| sb | Spurabstand der Sensoren |
| v | Vorlauf |
| X | Abstand |
| $\alpha$ | Winkel Aufdachung |
| $\beta$ | Winkel Kufenbreite / 2 |
| $\gamma$ | Winkel maximale Auslenkung Kufe |

**Patentansprüche**

1. Verfahren zur Aufdachungsmessung einer Rohrleitung (1), insbesondere einer Pipeline, mittels einer Ultraschallmessung mit Ultraschallprüfköpfen (8), die auf Sensorhaltern (4) eines Sensorträgers (6) montiert sind, der in einer Transportrichtung (7) durch die Rohrleitung (1) bewegt wird,

   wobei ein Sensorträger (6) verwendet wird, bei dem die Sensorhalter (4) auf beweglichen Kufen (5) montiert sind, die mittels Federelementen (10) radial nach außen gedrückt werden, damit sie an der Innenseite der Rohrleitung (1) anliegen, sodass der Sensorträger (6) eine Reduktionsfähigkeit aufweist und die Sensoren (8) einen festen Vorlauf (v) zur Innenseite der Rohrleitung (1) außerhalb des Bereichs einer Aufdachung (3) haben, Kufen (5) mit einer Kufenbreite (kb) verwendet werden, die größer als die in Umfangsrichtung der Rohrleitung (1) gemessene Aufdachungsbreite (ab) des Bereichs einer zu messenden Aufdachung (3) ist, und die Sensor-halter (4) jeweils nur in einem mittig zwischen zwei Kufenauflageflächen liegenden Messbereich mit Sensoren (8) bestückt sind, wobei die Messbereichbreite (mb) kleiner oder gleich der Hälfte der Kufenbreite (kb) ist, sodass die sich im Bereich einer Aufdachung (3) ergebende Vorlaufabweichung (dh2) der Sensoren (8) unterhalb eines vorgegebenen Grenzwertes bleibt,
   und der Sensorträger (6) mindestens drei in der Transportrichtung (7) des Sensorträgers (6) aufeinanderfolgende Ringe (9) mit von Sensorhaltern (4) getragenen Sensoren (8) aufweist, wobei die Sensoren (8) auf den jeweiligen Ringen (9) einen Spurabstand (sb) aufweisen und die Sensoren (8) der aufeinanderfolgenden Ringe (9) auf Lücke gegeneinander versetzt sind, sodass eine Vollabdeckung der Spuren über den Umfang der Rohrleitung (1) erzielt wird.

2. Verfahren nach Anspruch 1, **dadurch gekennzeichnet, dass** die Aufdachung (3) eines Rohres (1) gemessen wird, dessen Durchmesser zwischen 25 cm und 135 cm beträgt.

3. Verfahren nach einem der vorhergehenden Ansprüche, **dadurch gekennzeichnet, dass** die maximale Vorlaufabweichung (dh2) kleiner als 0,25 mm, bevorzugt kleiner als 0,18 mm ist.

4. Verfahren nach einem der vorhergehenden Ansprüche, **dadurch gekennzeichnet, dass** eine Aufdachung (3) gemessen wird, die kleiner als 6 mm, bevorzugt kleiner als 5 mm ist.

5. Verfahren nach einem der vorhergehenden Ansprüche, **dadurch gekennzeichnet, dass** die Messbereichbreite (mb) zwischen 5% und 50%, bevorzugt zwischen 10% und 45%, besonders bevorzugt zwischen 20% und 35% der Kufenbreite (kb) ist.

6. Verfahren nach einem der vorhergehenden Ansprüche, **dadurch gekennzeichnet, dass** für die Messung von Aufdachungen (3), die kleiner als 5 mm sind, und für eine maximale Vorlaufabweichung (dh2), die kleiner als 0,25 mm ist, die Kufenbreite (kb), die Messbereichbreite (mb) und der Spurabstand (sb) der Sensoren (8) so gewählt werden, dass für einen Rohrradius (r) und eine Aufdachungsbreite (ab) gilt: (kb-mb-sb)/ab > 0,72.

**7.** Verfahren nach einem der vorhergehenden Ansprüche, **dadurch gekennzeichnet, dass** ein Vorlauf (v) gewählt wird, der eine gleichzeitige Wanddickenmessung der Rohrleitung (1) ermöglicht, und gleichzeitig mit der Aufdachungsmessung eine Wanddickenmessung durchgeführt wird.

**8.** Verfahren nach einem der vorhergehenden Ansprüche, **dadurch gekennzeichnet, dass** der Spurabstand (sb) gleichmäßig über den Umfang verteilt wird.

**Claims**

**1.** Method for measuring a seam peak in a pipe (1), in particular in a pipeline, by means of an ultrasound measurement using ultrasound probes (8) mounted on sensor holders (4) of a sensor mount (6), which is moved in a direction of transport (7) through the pipe (1),
wherein

use is made of a sensor mount (6) on which the sensor holders (4) are mounted on movable skids (5) which are pressed radially outwards by means of spring elements (10) so that they bear against the inner face of the pipe (1), such that the sensor mount (6) has a size reducibility and the sensors (8) are at a fixed stand-off (v) from the inner face of the pipe (1) outside of the region of a seam peak (3),
use is made of skids (5) having a skid width (kb) that is larger than the seam peak width (ab), measured in the circumferential direction of the pipe (1), of the region of a seam peak (3) to be measured, and the sensor holders (4) are each equipped with sensors (8) only in a measuring region located centrally between two skid contact surfaces, wherein the measuring region width (mb) is smaller than or equal to half the skid width (kb), such that the resulting stand-off deviation (dh2) of the sensors (8) in the region of a seam peak (3) remains below a specified threshold value,
and the sensor mount (6) comprises at least three rings (9) arranged successively in the direction of transport (7) of the sensor mount (6), said rings having sensors (8) borne by sensor holders (4), wherein the sensors (8) on the respective rings (9) have a track spacing (sb) and the sensors (8) of the successive rings (9) are offset from each other, such that full coverage of the tracks is achieved over the circumference of the pipe (1).

**2.** Method according to claim 1, **characterized in that** the seam peak (3) of a pipe (1) having a diameter of between 25 cm and 135 cm is measured.

**3.** Method according to any one of the preceding claims, **characterized in that** the maximum stand-off deviation (dh2) is less than 0.25 mm, preferably less than 0.18 mm.

**4.** Method according to any one of the preceding claims, **characterized in that** a seam peak (3) of less than 6 mm, preferably less than 5 mm, is measured.

**5.** Method according to any one of the preceding claims, **characterized in that** the measuring region width (mb) is between 5% and 50%, preferably between 10% and 45%, particularly preferably between 20% and 35% of the skid width (kb).

**6.** Method according to any one of the preceding claims, **characterized in that**, in order to measure seam peaks (3) of less than than 5 mm, and for a maximum stand-off deviation (dh2) of less than 0.25 mm, the skid width (kb), the measuring region width (mb) and the track spacing (sb) of the sensors (8) are selected such that, for a pipe radius (r) and a seam peak width (ab), the following applies: (kb-mb-sb)/ab > 0.72.

**7.** Method according to any one of the preceding claims, **characterized in that** a stand-off (v) that enables a simultaneous measurement of the wall thickness of the pipe (1) is selected, and a wall thickness measurement is carried out at the same time as the seam peak measurement.

**8.** Method according to any one of the preceding claims, **characterized in that** the track spacing (sb) is evenly distributed over the circumference.

**Revendications**

1. Procédé de mesure de surépaisseur d'une canalisation (1), en particulier d'un pipeline, au moyen d'une mesure par ultrasons avec des sondes ultrasonores (8) montées sur des fixations de capteurs (4) d'un support de capteurs (6) déplacé dans une direction de transport (7) dans la canalisation (1),
où

un support de capteurs (6) est utilisé, où les fixations de capteurs (4) sont montées sur des sabots mobiles (5) poussés radialement vers l'extérieur au moyen d'éléments de ressort (10) pour appui contre la face intérieure de la canalisation (1), de sorte que le support de capteurs (6) présente une capacité de réduction et que les capteurs (8) ont une avance fixe (v) vers la face intérieure de la canalisation (1) en dehors de la zone d'une surépaisseur (3), où des sabots (5) sont utilisés avec une largeur de sabot (kb) supérieure à la largeur de surépaisseur (ab) de la zone de surépaisseur (3) à mesurer dans la direction circonférentielle de la conduite (1) , et où les fixations de capteurs (4) ne sont équipées de capteurs (8) respectifs que dans une zone de mesure centrale entre deux surfaces d'appui de sabot, la largeur de ladite zone de mesure (mb) étant inférieure ou égale à la moitié de la largeur de sabot (kb), de sorte que l'écart d'avance (dh2) des capteurs (8) résultant dans la zone d'une surépaisseur (3) reste inférieur à une valeur limite prédéfinie,
et où le support de capteurs (6) présente au moins trois anneaux (9) consécutifs dans la direction de transport (7) du support de capteurs (6) avec des capteurs (8) supportés par des fixations de capteurs (4), lesdits capteurs (8) présentant un espacement (sb) sur les anneaux (9) respectifs, et les capteurs (8) des anneaux (9) consécutifs étant décalés les uns par rapport aux autres, de manière à obtenir une couverture complète des espacements sur la circonférence de la conduite (1).

2. Procédé selon la revendication 1, **caractérisé en ce que** l'on mesure la surépaisseur (3) d'une canalisation (1) dont le diamètre est compris entre 25 cm et 135 cm.

3. Procédé selon l'une des revendications précédentes, **caractérisé en ce que** l'écart d'avance (dh2) maximal est inférieur à 0,25 mm, de préférence inférieur à 0,18 mm.

4. Procédé selon l'une des revendications précédentes, **caractérisé en ce qu'**une surépaisseur (3) est mesurée, laquelle est inférieure à 6 mm, de préférence inférieure à 5 mm.

5. Procédé selon l'une des revendications précédentes, **caractérisé en ce que** la largeur de la zone de mesure (mb) est comprise entre 5 % et 50 %, de préférence entre 10 % et 45 %, tout particulièrement entre 20 % et 35 % de la largeur de sabot (kb).

6. Procédé selon l'une des revendications précédentes, **caractérisé en ce que**, pour la mesure de surépaisseurs (3) inférieures à 5 mm et pour un écart d'avance (dh2) maximal inférieur à 0,25 mm, la largeur de sabot (kb), la largeur de plage de mesure (mb) et l'espacement (sb) des capteurs (8) sont sélectionnés de sorte que, pour un rayon de canalisation (r) et une largeur de surépaisseur (ab) : (kb-mb-sb)/ab > 0,72.

7. Procédé selon l'une des revendications précédentes, **caractérisé en ce qu'**une avance (v) est sélectionnée, permettant une mesure simultanée de l'épaisseur de paroi de la canalisation (1), et l'exécution d'une mesure d'épaisseur de paroi simultanée à la mesure de surépaisseur.

8. Procédé selon l'une des revendications précédentes, **caractérisé en ce que** l'espacement (sb) est régulièrement réparti sur la circonférence.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DD 301770 B5
- DE 3034319 C2
- DE 3853323 T2
- DE 10262232 B4
- US 2001017541 A1

**In der Beschreibung aufgeführte Nicht-Patentliteratur**

- **H.-J. SCHMIDT ; W. SCHMIDT.** Sanierung einer Rohölpipeline - Verfahren und Bewertungskriterien. *Symposium Pipelinetechnik,* 2002